# EUROPÄISCHE PATENTSCHRIFT

(11) **EP 4 230 376 B1**
(45) Veröffentlichungstag und Bekanntmachung des Hinweises auf die Patenterteilung: **11.12.2024**
(21) Anmeldenummer: 22215567.3
(22) Anmeldetag: 21.12.2022
(51) Int. Cl.: B05B 1/14, B05B 1/34, B23K 26/36, B23K 26/382, B29C 64/188, B33Y 40/20, B33Y 80/00, B29C 45/00, B05B 1/06

(54) **MULTISTRAHL HOHLKEGELDÜSE**
MULTIBEAM HOLLOW CONE NOZZLE
BUSE CONIQUE CREUSE À JETS MULTIPLES

(30) Priorität: 26.01.2022 DE 102022101750
(43) Veröffentlichungstag der Anmeldung: 23.08.2023
(73) Patentinhaber: Aero Pump GmbH, 65239 Hochheim/Main (DE)
(72) Erfinder: Rother, Sebastian, 55116 Mainz (DE); Marszalek, Milena Angelika, 55139 Mainz (DE)
(74) Vertreter: Keil & Schaafhausen Patentanwälte PartGmbB

(56) Entgegenhaltungen:
- EP-A2- 0 661 069
- WO-A1-2004/043608
- WO-A1-2012/055051
- US-A- 4 074 861
- US-A1- 2006 103 051
- US-A1- 2013 161 417
- US-A1- 2020 139 385

## Beschreibung

Die vorliegende Erfindung betrifft einen Düsenkörper, der durch ein Spritzgussverfahren oder 3D-Druckverfahren aus thermoplastischem Kunstsoff hergestellt ist.

Weiterhin betrifft die Erfindung ein Verfahren zur Herstellung eines Düsenkörpers.

Die US 2013/0161417 A1 zeigt zwei Wirbelkammern mit einer zylindrischen Geometrie, in die ausgehend von einem Versorgungskanal Fluid tangential eingespritzt wird. Das in der Wirbelkammer rotierende Fluid wird durch einen außermittig zur Wirbelkammer angeordneten Auslasskanal ausgebracht. Der Auslasskanal ist dazu schräg zur Achse der Wirbelkammer angeordnet. Die US 2020/0139385 A1 zeigt eine Düsenanordnung mit mehreren Düsenöffnungen, die durch asymmetrische, kegelstumpfförmige, konvergierende Fluidkanäle mit einem Hohlraumsegment verbunden sind.

Die US 2006/0103051 A1 zeigt ein mikro-fluidisches Raster und ein entsprechendes Herstellverfahren. Aus der WO 2012/055051 A1 ist eine Vorrichtung zum Versprühen einer unter Druck stehenden Flüssigkeit bekannt. Hierbei werden Wirbelkanäle und Wirbelkammern beschrieben, wobei die Wirbelkammern einen kegelförmigen Bereich aufweisen, an den sich eine Auslassdüse anschließt. Der kegelförmige Bereich und die Auslassdüse sind entlang einer Kammerlängsachse angeordnet, die gegenüber einer Vorrichtungsachse des Mundstücks schräg angeordnet ist. Die EP 0 661 069 A2 zeigt eine Düsenspitze mit zwei Spritzöffnungen und einem Düsensack. Der Düsensack wird durch Wirbelkanäle gespeist. Einen Düsenknopf mit mehreren Düsenöffnungen zeigt die WO 2004/043608 A1, wobei der Einlassbereich eine Kanalwand aufweist, die in den Figuren konisch dargestellt ist. Die US 4,074,861 A zeigt eine Struktur und ein Verfahren zur Kontrolle eines Sprühmusters. Dafür ist ein Öffnungselement mit Wirbelkanälen, einer Wirbelkammer und einem geneigten Boden vorgesehen.

Im Spritzgussverfahren wird Kunststoff in eine Form gepresst, so dass durch das Spritzgussverfahren eine Reihe verschiedener Geometrien herstellbar sind, die einigen Limitierungen unterliegen. So sind beispielsweise lochförmige Geometrien in ihrem Durchmesser nach unten begrenzt. Weiterhin sind beispielsweise Hinterschnitte im Rahmen des Spritzgussverfahrens nur begrenzt realisierbar.

Das 3D-Druckverfahren ist ein additives Fertigungsverfahren, bei dem Kunststoff in drei Dimensionen gedruckt wird. So wird beispielsweise Kunststoff Schicht für Schicht aufgetragen, sodass ein drei-dimensionales Gebilde entsteht. Das 3D-Druckverfahren unterliegt dabei Limitierungen, sodass die Gestaltungsfreiheit eingeschränkt ist.

Durch die Limitierungen des Spritzgussverfahrens oder des 3D-Druckverfahrens wird die Ausgestaltung des Düsenkörpers begrenzt, so dass auch nur gewisse Geometrien herstellbar sind. Entsprechend sind Charakteristiken des zu erzeugenden Sprühnebels begrenzt.

Es ist daher Ziel der vorliegenden Erfindung, einen Düsenkörper vorzuschlagen, durch den eine große Gestaltungsfreiheit des zu erzeugenden Sprühnebels ermöglicht wird.

Diese Aufgabe wird durch die Merkmale des Anspruchs 1 und des Anspruchs 8 gelöst. Vorteilhafte Ausgestaltungen ergeben sich aus den Unteransprüchen.

Der Düsenkörper weist wenigstens zwei Hohlkegeldüsengeometrien auf. Jede Hohlkegeldüsengeometrie weist jeweils eine Wirbelkammer und ein Loch, auch Düsenbohrung genannt, auf. In der Wirbelkammer wird ein zu zerstäubendes Fluid in Rotation versetzt, wobei das Fluid durch die Düsenbohrung aus dem Düsenkörper austritt. Dadurch wird ein Sprühkegel erzeugt. Die wenigstens zwei Sprühkegel können sich je nach Anordnung der Hohlkegeldüsengeometrien zumindest teilweise überschneiden. Durch die wenigstens zwei Hohlkegeldüsengeomtrien werden mehrere Sprühkegel erzeugt, so dass ein voluminöser, voller Sprühnebel erzeugt werden kann. Durch die wenigstens zwei Sprühkegel, die den Sprühnebel erzeugen, wird bei gleicher Ausbringung eine Oberfläche der Tröpfchen des Sprühnebels insgesamt größer als bei einer Ausbringung der gleichen Menge durch nur einen einzigen Sprühkegel. Weiterhin kann durch die Anordnung der Hohlkegeldüsengeometrien ein Sprühbild angepasst werden. So kann das Sprühbild beispielsweise voller, weicher oder breiter gestaltet werden. Weiterhin kann durch die Verwendung mehrerer Hohlkegeldüsengeometrien eine Betätigungskraft verringert werden, da ein Durchsatz des Fluids insgesamt durch mehrere Hohlkegeldüsengeometrien auftritt.

Vorzugsweise ist wenigstens eine der Hohlkegeldüsengeometrien asymmetrisch. So ist beispielsweise eine Düsenbohrung der asymmetrischen Hohlkegeldüsengeometrie exzentrisch, also außermittig, in Bezug auf die Wirbelkammer angeordnet. Der Begriff "asymmetrisch" bedeutet dabei nicht rotationssymmetrisch. Durch die asymmetrische Ausgestaltung wenigstens einer Hohlkegeldüsengeometrie kann eine Charakteristik des Sprühnebels gezielt gesteuert werden.

Vorzugsweise weist eine Düsenbohrung der asymmetrischen Hohlkegeldüsengeometrie eine Längsachse mit einem Winkel < 90°, vorzugsweise größer-gleich 50° und kleiner-gleich 88°, besonders bevorzugt größer-gleich 70° und kleiner-gleich 87°, zu einer Düsenaustrittsfläche auf. Die Düsenaustrittsfläche entspricht einer Fläche, durch die Fluid im Rahmen der Ausbringung nach außen tritt. Dadurch kann je nach Anordnung einzelner Hohlkegeldüsengeometrien beispielsweise ein sehr breiter Gesamtsprühnebel erzeugt werden. Entsprechend kann die Charakteristik des zu erzeugenden Sprühnebels durch Anpassung des Winkels beeinflusst werden.

Vorzugsweise weisen die Hohlkegeldüsengeometrien jeweils eine Düsenbohrung auf, die einen Durchmesser ≤ 300 µm, bevorzugt ≤ 200 µm, besonders bevorzugt ≤ 100 µm, aufweist. Durch entsprechend kleine Düsenbohrungen kann ein Sprühnebel mit entsprechend kleinen Tröpfchen erzeugt werden.

Vorzugsweise sind die wenigstens zwei Hohlkegeldüsengeometrien symmetrisch zueinander angeordnet. So können die Hohlkegeldüsengeometrien beispielsweise punktsymmetrisch, rotationssymmetrisch oder spiegelsymmetrisch zueinander angeordnet sein, so dass ein gleichmäßiger Sprühnebel erzeugt werden kann.

Vorzugsweise weist der Düsenkörper ein Material mit mindestens einer Hauptkomponente aus der Gruppe PMMA (Polymethylmethacrylat), POM (Polyoxymethylen), PP (Polypropylen), PE (Polyethylen), ABS (Acrylnitril-Butadien-Styrol-Copolymer), COC (Cycloolefin-Copolymer), PA (Polyamid), PC (Polycarbonat), PBT (Polybutylenterephthalat), PEEK (Polyetheretherketon), PEI (Polyetherimid), PET (Polyethylenterephthalat) und PPE (Polyphenylenether), auf. Diese Materialien gehörten zu den thermoplastischen Kunststoffen und lassen sich einfach durch Spritzgussverfahren oder 3D-Druckverfahren alleine oder in Kombination verarbeiten. Als Kombination ist beispielsweise eine Mischung von PE und PP zu nennen.

Vorzugsweise sind die wenigstens zwei Hohlkegeldüsengeometrien wenigstens teilweise durch eine Laserbearbeitung hergestellt. Die wenigstens teilweise Laserbearbeitung kann dabei beispielsweise Methoden der Laserablation, des Laserbohrens oder der 3D-Laserablation verwenden. Unter der Laserablation wird das Abtragen von Material von einer Oberfläche durch den Beschuss mittels eines gepulsten Lasers bezeichnet. Dabei führt der Laser bzw. die Laserstrahlung zu einer rapiden Erhitzung und folglich der Ausbildung eines Plasmas an der Oberfläche des Werkstücks. Laserbohren ist ebenfalls ein nicht spanendes Bearbeitungsverfahren, bei dem mittels Laserstrahlung so viel Energie in das Werkstück eingebracht wird, dass der Werkstoff aufgeschmolzen und teilweise verdampft wird. Die 3D-Laserablation ist eine Sonderkonstellation der Laserablation, bei dem Material in drei Dimensionen bearbeitet wird. Weiterhin ist beispielsweise eine Kombination der genannten Methoden möglich. Durch die wenigstens teilweise Laserbearbeitung kann beispielsweise nur eine einzelne Geometrie der Hohlkegeldüsengeometrien erzeugt werden. Alternativ dazu können auch die kompletten Hohlkegeldüsengeometrien durch die Laserbearbeitung hergestellt werden. Dies führt zu einer großen Gestaltungsfreiheit und großen Flexibilität.

Weiterhin wird die Aufgabe durch ein Verfahren mit den Merkmalen des Anspruchs 8 gelöst.

Durch die Laserbearbeitung können die Hohlkegeldüsengeometrien flexibel gestaltet bzw. erzeugt werden. Weiterhin sind durch die Laserbearbeitung Geometrien, wie beispielsweise Hinterschnitte, möglich, die durch ein Spritzgussverfahren oder 3D-Druckverfahren nicht oder nur begrenzt herstellbar sind. Dadurch kann ein Sprühnebel, der durch die Hohlkegeldüsengeometrien des Düsenkörpers erzeugt wird, gezielt beeinflusst werden. Diese Beeinflussung wird durch eine Anpassung der Hohlkegeldüsengeometrien erreicht, die durch die Laserbearbeitung einfach angepasst werden können.

Vorzugsweise verwendet die Laserbearbeitung Methoden der Laserablation, des Laserbohrens und/oder der 3D-Laserablation. Bei der Laserablation wird Material von einer Oberfläche durch Beschuss mit einem gepulsten Laserstrahl bzw. einer gepulsten Laserstrahlung abgetragen. Bei dem Laserbohren wird mittels Laserstrahlung lokal so viel Energie in das Werkstück eingebracht, so dass der Werkstoff lokal aufgeschmolzen und teilweise verdampft wird. Dabei ist ein Aufschmelzen des Materials am Rand der Bohrung nicht erwünscht. Ebenfalls ist beispielsweise eine Kombination der genannten Methoden durchführbar. Dadurch wird eine gute Gestaltungsfreiheit der Hohlkegeldüsengeometrie bzw. des Düsenkörpers erreicht.

Vorzugsweise stellt die Laserbearbeitung wenigstens eine asymmetrische Hohlkegeldüsengeometrie her. Der Begriff "asymmetrisch" bezieht sich dabei auf eine Anordnung, bei der eine Düsenbohrung der Hohlkegeldüsengeometrie außermittig, also exzentrisch, zur Wirbelkammer angeordnet ist. Entsprechend ist die Hohlkegeldüsengeometrie nicht rotationssymmetrisch. Der Begriff "asymmetrisch" bedeutet nicht rotationssymmetrisch. Durch diese Anordnung kann ein Sprühkegel der asymmetrischen Hohlkegeldüsengeometrie an entsprechende Vorgaben angepasst werden, so dass beispielsweise ein sehr breiter Gesamtsprühnebel erzeugt werden kann.

Vorzugsweise erzeugt die Laserbearbeitung eine Düsenbohrung der asymmetrischen Düsengeometrie mit einer Achse mit einem Winkel < 90°, vorzugsweise größer-gleich 50° und kleiner-gleich 88°, besonders bevorzugt größer-gleich 70° und kleiner-gleich 87°, zu einer Austrittsfläche. Dadurch kann eine Überschneidung der Sprühkegel angepasst werden, so dass eine Charakteristik des Gesamtsprühnebels beeinflusst werden kann.

Vorzugsweise stellt die Laserbearbeitung jeweils eine Düsenbohrung der Hohlkegeldüsengeometrien mit einem Durchmesser ≤ 300 µm, bevorzugt ≤ 200 µm, besonders bevorzugt ≤ 100 µm, her. Die Laserbearbeitung ist eine effiziente und flexible Möglichkeit, Düsenbohrungen mit den genannten Durchmessern herzustellen. Durch die Laserbearbeitung ist weiterhin eine Anpassung der Düsenbohrungsdurchmesser einfach realisierbar. Dadurch kann auf neue Anforderungen flexibel reagiert werden.

Vorzugsweise werden die wenigstens zwei Hohlkegeldüsengeometrien symmetrisch zueinander erzeugt. Durch die symmetrische Anordnung der Hohlkegeldüsengeometrien kann ein symmetrischer Sprühnebel erzeugt werden. Entsprechend gleichmäßig werden Fluidtröpfchen innerhalb des Sprühnebels verteilt.

Vorzugsweise verwendet das Spritzgussverfahren oder das 3D-Druckverfahren ein Material mit mindestens einer Hauptkomponente aus der Gruppe PMMA (Polymethylmethacrylat), POM (Polyoxymethylen), PP (Polypropylen), PE (Polyethylen), ABS (Acrylnitril-Butadien-Styrol-Copolymer), COC (Cycloolefin-Copolymer), PA (Polyamid), PC (Polycarbonat), PBT (Polybutylenterephthalat), PEEK (Polyetheretherketon), PEI (Polyetherimid), PET (Polyethylenterephthalat) und PPE (Polyphenylenether). Das Spritzgussverfahren oder das 3D-Druckverfahren unter Verwendung von Kunststoff ist ein gängiges Verfahren, das eine kostengünstige Möglichkeit darstellt, Düsenkörper aus einem oder mehreren Kunststoffen herzustellen. So kann der Düsenkörper beispielsweise aus einem einzelnen Material oder aus einer Kombination bzw. Mischung verschiedener genannter Materialien hergestellt werden. Als Beispiel für eine Mischung aus PE und PP zu nennen.

Die Erfindung wird im Folgenden anhand eines bevorzugten Ausführungsbeispiels in Verbindung mit der Zeichnung beschrieben. Hierin zeigen:
- Fig. 1: eine schematische Draufsicht auf einen Düsenkörper eines ersten Ausführungsbeispiels,
- Fig. 2: eine schematische Schnittansicht eines Düsenkörpers des ersten Ausführungsbeispiels,
- Fig. 3: eine schematische Draufsicht eines Düsenkörpers eines zweiten Ausführungsbeispiels,
- Fig. 4: eine schematische Schnittansicht eines Düsenkörpers des zweiten Ausführungsbeispiels,
- Fig. 5: eine schematische Schnittdarstellung einer asymmetrischen Hohlkegeldüsengeometrie,
- Fig. 6: eine schematische Schnittdarstellung einer symmetrischen Hohlkegeldüsengeometrie.

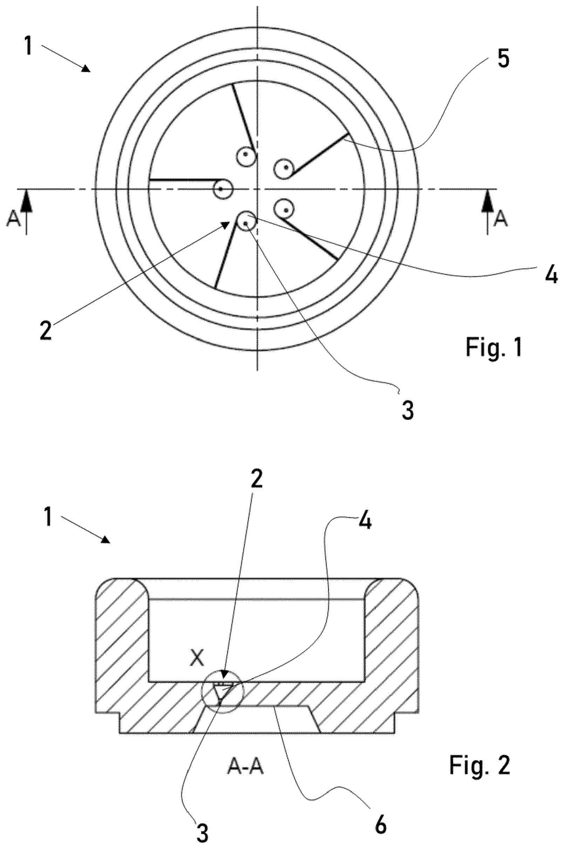

Fig. 1 zeigt einen Düsenkörper 1 mit fünf asymmetrischen Hohlkegeldüsengeometrien 2, die jeweils eine Düsenbohrung 3 und eine Wirbelkammer 4 aufweisen. Die asymmetrischen Hohlkegeldüsengeometrien 2 sind jeweils mit einem Wirbelkanal 5 verbunden. Weiterhin ist in Fig. 1 eine Schnittebene A-A dargestellt, die gleichzeitig eine Symmetrieebene der Hohlkegeldüsengeometrieanordnung darstellt.

Gleiche Elemente sind unabhängig vom Ausführungsbeispiel mit den gleichen Bezugszeichen gekennzeichnet.

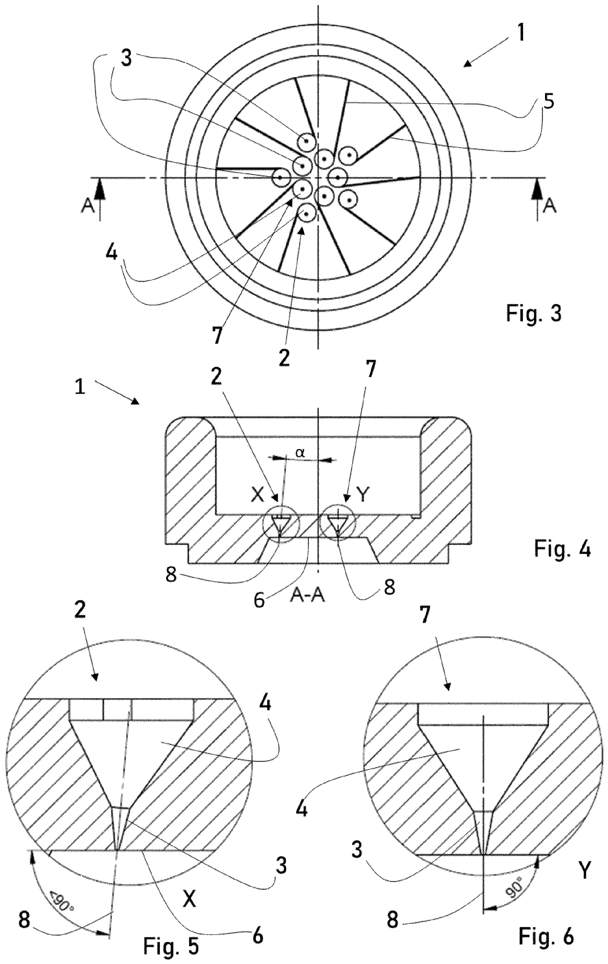

Fig. 2 zeigt eine Schnittansicht des in Fig. 1 dargestellten Düsenkörpers 1 entlang der Schnittebene A-A. Die gezeigte asymmetrische Hohlkegeldüsengeometrie 2 ist im Wesentlichen schräg zu einer Düsenaustrittsfläche 6 angeordnet. Fig. 3 zeigt ein zweites Ausführungsbeispiel des Düsenkörpers 1 mit asymmetrischen Hohlkegeldüsengeometrien 2 und symmetrischen Hohlkegeldüsengeometrien 7. Die Anordnung der Hohlkegeldüsengeometrien 2, 7 ist symmetrisch zur Schnittebene bzw. Symmetrieebene A-A. Jede der Hohlkegeldüsengeometrien 2, 7 weist jeweils eine Wirbelkammer 4 und eine Düsenbohrung 3 auf. Weiterhin ist jede der Hohlkegeldüsengeometrien 2, 7 mit jeweils einem Wirbelkanal 5 verbunden.

Fig. 4 zeigt das zweite Ausführungsbeispiel des Düsenkörpers 1 entlang der Schnittebene A-A. Eine Längsachse 8 der Düsenbohrung 3 der asymmetrischen Hohlkegeldüsengeometrie 2 weist einen Winkel α zu einer Senkrechten der Düsenaustrittsfläche 6 auf. Die Längsachse 8 der symmetrischen Hohlkegeldüsengeometrie 7 ist parallel zur Senkrechten der Austrittsfläche 6 angeordnet.

Fig. 5 zeigt eine Detailansicht der asymmetrischen Hohlkegeldüsengeometrien 2. Die Längsachse 8 der Düsenbohrung 3 weist dabei einen Winkel von < 90° gegenüber zur Düsenaustrittsfläche 6 auf. Die asymmetrische Hohlkegeldüsengeometrie 2 weist neben der Düsenbohrung 3 auch die Wirbelkammer 5 auf. Gemäß der Erfindung weist die Wirbelkammer 5 dabei eine asymmetrische Kegelgeometrie auf.

Asymmetrisch bedeutet in dieser Beschreibung nicht rotationssymmetrisch. Andere Symmetrien wie beispielsweise eine Spiegelsymmetrie ist jedoch möglich.

Fig. 6 zeigt eine Detailansicht der symmetrischen Hohlkegeldüsengeometrie 7. Diese weist eine Wirbelkammer 5 und eine Düsenbohrung 3 auf, wobei die Düsenbohrung 3 eine Längsachse aufweist, die senkrecht zur Austrittsfläche 6 angeordnet ist.

Der Düsenkörper 1 weist als eine Hauptkomponente thermoplastischen Kunststoff, vorzugsweise PMMA (Polymethylmethacrylat, POM (Polyoxymethylen), PP (Polypropylen), PE (Polyethylen), ABS (Acrylnitril-Butadien-Styrol-Copolymer), COC (Cycloolefin-Copolymer), PA (Polyamid), PC (Polycarbonat), PBT (Polybutylenterephthalat), PEEK (Polyetheretherketon), PEI (Polyetherimid), PET (Polyethylenterephthalat) und/oder PPE (Polyphenylenether) auf. Der Kunststoff wird mittels eines Spritzgussverfahrens oder eines 3D-Druckverfahrens zu dem Düsenkörper 1 verarbeitet, wobei anschließend die Hohlkegeldüsengeometrien 2, 7 durch Laserbearbeitung erzeugt werden. Dabei können beispielsweise Methoden der Laserablation, des Laserbohrens und/oder der 3D-Laserablation verwendet werden.

Durch die Laserbearbeitung können Düsenbohrungen 3 mit Durchmessern ≤ 300 µm, bevorzugt ≤ 200 µm und besonders bevorzugt ≤ 100 µm hergestellt werden. Diese Maße beziehen sich auf den kleinsten Durchmesser der Düsenbohrung 3.

Die Längsachse 8 der asymmetrischen Hohlkegeldüsengeometrie 2 weist einen Winkel < 90° zur Austrittsfläche 6 auf. Ein bevorzugter Winkel ist dabei 85°. Entsprechend ist die Längsachse 8 der asymmetrischen Hohlkegeldüsengeometrie 2 um den Winkel α zu einer Senkrechten der Austrittsfläche 6 geneigt. Dies ist in Fig. 4 dargestellt. Im vorliegenden Ausführungsbeispiel ist der Winkel α 5°, so dass die Längsachse 8 der asymmetrischen Hohlkegeldüsengeometrie 2 einen Winkel von 85° zur Düsenaustrittsfläche 6 aufweist. Alternative Winkel liegen beispielsweisen im Bereich größer-gleich 50° und kleiner-gleich 88°, oder alternativ dazu beispielsweise im Bereich größer-gleich 70° und kleiner-gleich 87° in Bezug auf die Austrittsfläche 6.

### Bezugszeichenliste

- 1: Düsenkörper
- 2: asymmetrische Hohlkegeldüsengeometrie
- 3: Düsenbohrung
- 4: Wirbelkammer
- 5: Wirbelkanal
- 6: Düsenaustrittsfläche
- 7: symmetrische Hohlkegeldüsengeometrie
- 8: Längsachse der Düsenbohrung

## Patentansprüche

1. Düsenkörper (1), der durch ein Spritzgussverfahren oder 3D-Druckverfahren aus einem thermoplastischen Kunststoff hergestellt ist, wobei der Düsenkörper (1) wenigstens zwei Hohlkegeldüsengeometrien (2, 7) mit jeweils einer Düsenbohrung (3) und einer Wirbelkammer (4) aufweist, **dadurch gekennzeichnet, dass** die Wirbelkammer (4) eine asymmetrische Kegelgeometrie aufweist und mit einem Wirbelkanal (5) verbunden ist.

2. Düsenkörper (1) nach Anspruch 1, **dadurch gekennzeichnet, dass** wenigstens eine der Hohlkegeldüsengeometrien (2) asymmetrisch ist.

3. Düsenkörper (1) nach Anspruch 2, **dadurch gekennzeichnet, dass** eine Düsenbohrung der asymmetrischen Hohlkegeldüsengeometrien (2) eine Längsachse (8) mit einem Winkel kleiner 90°, vorzugsweise größer-gleich 50° und kleiner-gleich 88°, besonders bevorzugt größer-gleich 70° und kleiner-gleich 87°, zu einer Düsenaustrittsfläche (6) aufweist.

4. Düsenkörper (1) nach einem der Ansprüche 1 bis 3, **dadurch gekennzeichnet, dass** die Hohlkegeldüsengeometrien (2, 7) jeweils eine Düsenbohrung (3) aufweisen, die einen Durchmesser kleiner-gleich 300µm, bevorzugt kleiner-gleich 200µm, besonders bevorzugt kleiner-gleich 100µm, aufweist.

5. Düsenkörper (1) nach einem der Ansprüche 1 bis 4, **dadurch gekennzeichnet, dass** die wenigstens zwei Hohlkegeldüsengeometrien (2, 7) symmetrisch zueinander angeordnet sind.

6. Düsenkörper (1) nach einem der Ansprüche 1 bis 5, **dadurch gekennzeichnet, dass** der Düsenkörper (1) ein Material mit mindestens einer Hauptkomponente aus der Gruppe PMMA, POM, PP, PE, ABS, COC, PA, PC, PBT, PEEK, PEI, PET und PPE aufweist.

7. Düsenkörper (1) nach einem der Ansprüche 1 bis 6, **dadurch gekennzeichnet, dass** die wenigstens zwei Hohlkegeldüsengeometrien (2, 7) wenigstens teilweise durch eine Laserbearbeitung hergestellt sind.

8. Verfahren zur Herstellung eines Düsenkörpers (1) aus einem thermoplastischen Kunststoff nach einem der Ansprüche 1 bis 7, **dadurch gekennzeichnet, dass** das Verfahren folgende Schritt aufweist:
a) Herstellen des Düsenkörpers (1) durch ein Spritzgussverfahren oder 3D-Druckverfahren;
b) Wenigstens teilweises Erzeugen von wenigstens zwei Hohlkegeldüsengeometrien (2, 7) mit jeweils einer Düsenbohrung (3) und einer Wirbelkammer (4) durch Laserbearbeitung, wobei die Wirbelkammer (4) eine asymmetrische Kegelgeometrie aufweist und mit einem Wirbelkanal (5) verbunden ist.

9. Verfahren nach Anspruch 8, **dadurch gekennzeichnet, dass** die Laserbearbeitung Methoden der Laserablation, des Laserbohrens und/oder der 3D-Laserablation verwendet.

10. Verfahren nach Anspruch 8 oder 9, **dadurch gekennzeichnet, dass** die Laserbearbeitung wenigstens eine asymmetrische Hohlkegeldüsengeometrie (2) herstellt.

11. Verfahren nach einem der Ansprüche 8 bis 10, **dadurch gekennzeichnet, dass** die Laserbearbeitung eine Düsenbohrung (3) der asymmetrischen Hohlkegeldüsengeometrie (2) eine Längsachse (8) mit einem Winkel kleiner 90°, vorzugsweise größer-gleich 50° und kleiner-gleich 88°, besonders bevorzugt größer-gleich 70° und kleiner-gleich 87°, zu einer Austrittsfläche (6) erzeugt.

12. Verfahren nach einem der Ansprüche 8 bis 11, **dadurch gekennzeichnet, dass** die Laserbearbeitung jeweils eine Düsenbohrung der Hohlkegeldüsengeometrien (2, 7) mit einem Durchmesser kleiner-gleich 300µm, bevorzugt kleiner-gleich 200µm, besonders bevorzugt kleiner-gleich 100µm, herstellt.

13. Verfahren nach einem der Ansprüche 8 bis 12, **dadurch gekennzeichnet, dass** die wenigstens zwei Hohlkegeldüsengeometrien (2, 7) symmetrisch zueinander erzeugt werden.

14. Verfahren nach einem der Ansprüche 8 bis 13, **dadurch gekennzeichnet, dass** das Spritzgussverfahren ein Material mit mindestens einer Hauptkomponente aus der Gruppe PMMA, POM, PP, PE, ABS, COC, PA, PC, PBT, PEEK, PEI, PET und PPE verwendet.

## Claims

1. Nozzle body (1) which is produced from a thermoplastic material by an injection moulding process or 3D printing process, the nozzle body (1) having at least two hollow cone nozzle geometries (2, 7) each with a nozzle bore (3) and a swirl chamber (4), **characterized in that** the swirl chamber (4) has an asymmetrical cone geometry and is connected to a swirl channel (5).

2. Nozzle body (1) according to claim 1, **characterized in that** at least one of the hollow cone nozzle geometries (2) is asymmetrical.

3. Nozzle body (1) according to claim 2, **characterized in that** a nozzle bore of the asymmetrical hollow cone nozzle geometries (2) has a longitudinal axis (8) with an angle of less than 90°, preferably greater than or equal to 50° and less than or equal to 88°, particularly preferably greater than or equal to 70° and less than or equal to 87°, to a nozzle outlet surface (6).

4. Nozzle body (1) according to one of claims 1 to 3, **characterized in that** the hollow cone nozzle geometries (2, 7) each have a nozzle bore (3) which has a diameter less than or equal to 300 µm, preferably less than or equal to 200 µm, particularly preferably less than or equal to 100 µm.

5. Nozzle body (1) according to one of claims 1 to 4, **characterized in that** the at least two hollow cone nozzle geometries (2, 7) are arranged symmetrically to one another.

6. Nozzle body (1) according to one of claims 1 to 5, **characterized in that** the nozzle body (1) has a material with at least one main component from the group PMMA, POM, PP, PE, ABS, COC, PA, PC, PBT, PEEK, PEI, PET and PPE.

7. Nozzle body (1) according to one of claims 1 to 6, **characterized in that** the at least two hollow cone nozzle geometries (2, 7) are at least partially produced by laser machining.

8. Method for producing a nozzle body (1) from a thermoplastic material according to one of claims 1 to 7, **characterized in that** the method comprises the following step:
a) Producing the nozzle body (1) by an injection molding process or 3D printing process;
b) At least partial production of at least two hollow cone nozzle geometries (2, 7) each with a nozzle bore (3) and a swirl chamber (4) by laser machining, wherein the swirl chamber (4) has an asymmetrical cone geometry and is connected to a swirl channel (5).

9. Method according to claim 8, **characterized in that** the laser processing uses methods of laser ablation, laser drilling and/or 3D laser ablation.

10. Method according to claim 8 or 9, **characterized in that** the laser processing produces at least one asymmetrical hollow cone nozzle geometry (2).

11. Method according to one of claims 8 to 10, **characterized in that** the laser processing produces a nozzle bore (3) of the asymmetrical hollow cone nozzle geometry (2) having a longitudinal axis (8) with an angle of less than 90°, preferably greater than or equal to 50° and less than or equal to 88°, particularly preferably greater than or equal to 70° and less than or equal to 87°, to an exit surface (6).

12. Process according to one of claims 8 to 11, **characterized in that** the laser processing produces a respective nozzle bore of the hollow cone nozzle geometries (2, 7) with a diameter less than or equal to 300 µm, preferably less than or equal to 200 µm, particularly preferably less than or equal to 100 µm.

13. Process according to one of claims 8 to 12, **characterized in that** the at least two hollow cone nozzle geometries (2, 7) are produced symmetrically to each other.

14. Process according to one of claims 8 to 13, **characterized in that** the injection moulding process uses a material with at least one main component from the group PMMA, POM, PP, PE, ABS, COC, PA, PC, PBT, PEEK, PEI, PET and PPE.

## Revendications

1. Corps de buse (1) fabriqué à partir d'une matière thermoplastique par un procédé de moulage par injection ou un procédé d'impression 3D, le corps de buse (1) présentant au moins deux géométries de buse à cône creux (2, 7) avec chacune un alésage de buse (3) et une chambre de turbulence (4), **caractérisé en ce que** la chambre de turbulence (4) présente une géométrie conique asymétrique et est reliée à un canal de turbulence (5).

2. Corps de buse (1) selon la revendication 1, **caractérisé en ce qu'**au moins une des géométries de buse à cône creux (2) est asymétrique.

3. Corps de buse (1) selon la revendication 2, **caractérisé en ce qu'**un alésage de buse des géométries de buse à cône creux asymétriques (2) présente un axe longitudinal (8) avec un angle inférieur à 90°, de préférence supérieur ou égal à 50° et inférieur ou égal à 88°, de manière particulièrement préférée supérieur ou égal à 70° et inférieur ou égal à 87°, par rapport à une surface de sortie de buse (6).

4. Corps de buse (1) selon l'une des revendications 1 à 3, **caractérisé en ce que** les géométries de buse à cône creux (2, 7) présentent chacune un alésage de buse (3) qui présente un diamètre inférieur ou égal à 300 µm, de préférence inférieur ou égal à 200 µm, de manière particulièrement préférée inférieur ou égal à 100 µm.

5. Corps de buse (1) selon l'une des revendications 1 à 4, **caractérisé en ce que** les au moins deux géométries de buse à cône creux (2, 7) sont disposées symétriquement l'une par rapport à l'autre.

6. Corps de buse (1) selon l'une des revendications 1 à 5, **caractérisé en ce que** le corps de buse (1) présente un matériau avec au moins un composant principal du groupe PMMA, POM, PP, PE, ABS, COC, PA, PC, PBT, PEEK, PEI, PET et PPE.

7. Corps de buse (1) selon l'une des revendications 1 à 6, **caractérisé en ce que** les au moins deux géométries de buse à cône creux (2, 7) sont fabriquées au moins partiellement par un usinage au laser.

8. Procédé de fabrication d'un corps de buse (1) en matière thermoplastique selon l'une des revendications 1 à 7, **caractérisé en ce que** le procédé comprend les étapes suivantes :
a) Fabrication du corps de buse (1) par un procédé de moulage par injection ou un procédé d'impression 3D ;
b) Création au moins partielle d'au moins deux géométries de buses coniques creuses (2, 7) avec chacune un alésage de buse (3) et une chambre de turbulence (4) par usinage laser, la chambre de turbulence (4) présentant une géométrie conique asymétrique et étant reliée à un canal de turbulence (5).

9. Procédé selon la revendication 8, **caractérisé en ce que** l'usinage laser utilise des méthodes d'ablation laser, de perçage laser et/ou d'ablation laser 3D.

10. Procédé selon la revendication 8 ou 9, **caractérisé en ce que** l'usinage laser produit au moins une géométrie de cône creux asymétrique (2).

11. Procédé selon l'une des revendications 8 à 10, **caractérisé en ce que** l'usinage laser produit un alésage de buse (3) de la géométrie de buse à cône creux asymétrique (2) ayant un axe longitudinal (8) avec un angle inférieur à 90°, de préférence supérieur ou égal à 50° et inférieur ou égal à 88°, de manière particulièrement préférée supérieur ou égal à 70° et inférieur ou égal à 87°, par rapport à une surface de sortie (6).

12. Procédé selon l'une des revendications 8 à 11, **caractérisé en ce que** l'usinage au laser produit un alésage de buse de chacune des géométries de buses coniques creuses (2, 7) avec un diamètre inférieur ou égal à 300 µm, de préférence inférieur ou égal à 200 µm, de manière particulièrement préférée inférieur ou égal à 100 µm.

13. Procédé selon l'une des revendications 8 à 12, **caractérisé en ce que** les au moins deux géométries de buses à cône creux (2, 7) sont produites symétriquement l'une par rapport à l'autre.

14. Procédé selon l'une des revendications 8 à 13, **caractérisé en ce que** le procédé de moulage par injection utilise un matériau avec au moins un composant principal du groupe PMMA, POM, PP, PE, ABS, COC, PA, PC, PBT, PEEK, PEI, PET et PPE.
